# EUROPEAN PATENT SPECIFICATION

(11) **EP 1 449 368 B1**
(45) Date of publication and mention of the grant of the patent: **01.03.2006**
(21) Application number: 02786695.3
(22) Date of filing: 08.11.2002
(51) Int. Cl.: H04N 7/14, H04N 7/26, H04N 7/50, H04N 7/173

(54) **SYSTEM AND METHOD FOR RECORDING AND DISPLAYING VIDEO PROGRAMS FOR MOBILE HANDHELD DEVICES**
SYSTEM UND VERFAHREN ZUM AUFNEHMEN UND WIEDERGEBEN VON VIDEO PROGRAMMEN FÜR MOBILE TRAGBARE GERÄTE
SYSTEME ET PROCEDE D'ENREGISTREMENT ET D'AFFICHAGE DE PROGRAMMES VIDEO POUR DISPOSITIFS MOBILES PORTABLES

(30) Priority: 10.11.2001 US 337473 P; 10.11.2001 US 337497 P
(43) Date of publication of application: 25.08.2004
(73) Proprietor: Thomson Licensing, 92100 Boulogne Billancourt (FR)
(72) Inventor: COOPER, Jeffrey, Allen, Rocky Hill, NJ 08553 (US); BOYCE MAC DONALD, Jill, Manalapan, NJ 07726 (US)
(74) Representative: Benezeth, Philippe J.L. M.
(86) International application number: PCT/US2002/035886
(87) International publication number: WO 2003/043326

(56) References cited:
- WO-A-00/78050
- WO-A-01/69936
- US-B1- 6 308 201
- PATEL A ET AL: "A technique for multi-network access to multimedia messages" COMPUTER COMMUNICATIONS, ELSEVIER SCIENCE PUBLISHERS BV, AMSTERDAM, NL, vol. 20, no. 5, 1 July 1997 (1997-07-01), pages 324-337, XP004126688 ISSN: 0140-3664
- VASS J ET AL: "Efficient mobile video access in wireless environments" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 September 1999 (1999-09-21), pages 354-358, XP010353827 ISBN: 0-7803-5668-3
- MEGGERS J ET AL: "A multimedia communication architecture for handheld devices" PERSONAL, INDOOR AND MOBILE RADIO COMMUNICATIONS, 1998. THE NINTH IEEE INTERNATIONAL SYMPOSIUM ON BOSTON, MA, USA 8-11 SEPT. 1998, NEW YORK, NY, USA,IEEE, US, 8 September 1998 (1998-09-08), pages 1245-1249, XP010314631 ISBN: 0-7803-4872-9

## Description

The present invention relates to an apparatus and method for recording video programs, and in particular, to an apparatus and method for recording video programs for playback in combination with handheld mobile devices.

Personal video recorders (PVR) are devices that allow a user to select, by means of a graphical user interface (GUI) displayed on an associated television set, monitor, or other display, a television program to be broadcast at a future time or which is currently being broadcast, digitally "record" the selected program onto a storage module, such as a hard disk, and upon user command "playback" the stored program by retrieving it from storage, decompressing or decoding the program and outputting the video signal to an associated television set or other display device. Devices having such capability are currently sold under the trademarks "TiVo," "RePlayTV," "Sky +," and "Showstopper."

The video program signals are generally stored in the storage modules in a compressed format, such as MPEG-2, to allow efficient use of the storage available on the storage module. Generally, the programs are stored in the single compressed format, which will be referred herein as "large display format" since it is the currently available format most suitable for display on standard or high definition television receivers or monitors, on the storage module. During playback the compressed audio and video data are retrieved from the storage module, decompressed, and processed for display on a display device. PVR devices that perform the above-described functions may exist today as set top boxes, which interface to a TV, or as an internal PC card, or external interface card for a PC, which uses the PC's hard disk drive (HDD) for storage. In any event, current PVR devices are generally adapted for providing video signals suitable for display on a conventional large display screen. The term conventional large display screen as used herein refers to known displays associated with a television set or a computer system, including desktop and laptop systems.

Handheld devices, also known as mobile display devices (MDD), or personal data assistants (PDA), currently available under the trademarks Palm "Pilot," "Compaq iPAQ Pocket PC," and HP "Jomada," are commonly used, small general purpose computers, which store in local memory a variety of applications, including to do lists, addresses and phone number lists, games, and the like, and can run certain applications adapted for mobile devices. Presently available mobile handheld devices have much less memory and processing capacity than currently available desktop or laptop computers, and as a result, may be limited in their ability to process and display video information compared to the desktop or laptop computers. Such mobile handheld devices also generally include less memory and processing power than currently available PVR devices. Although limited when compared to the larger computer system, recent developments in the handheld device art have provided sufficient graphic interface, processing power, and memory to allow some display of audiovisual works, such as motion pictures and television programs in special handheld device format, to be viewed on the mobile device. Such displays are generally of lower resolution and quality than is available on a conventional television set, desktop computer, or laptop computer. However, the advantages of a PVR have not been made fully available on a mobile device for a number of reasons. The mobile devices have not yet been adapted to receive television broadcast directly from cable, antenna, or satellite. Also, the compressed video files as they are stored on current PVRs may still be too large for storage and playback on present handhelds.

The document Patel A, et al., "A Technique for Multi-network Access to Multimedia Messages" Computer Communications, Vol. 20, No. 5 (1997) p.324-327, discloses a Personal Message Center (PMC) that allows a user to store, retrieve, manage, and transmit multimedia messages originating from different message channels, e.g., e-mail, voice mail, fax messaging. The system comprises a common message store that stores all types of multimedia and multi-format messages, and an interface module that translates the multimedia messages in a format suitable for display or output at a particular message access terminal.

The document WO 01/69936 A2 discloses an A/V signal processing apparatus and method for transcoding between different compressed content representations to avoid the need for storing multiple compressed representations of a program. The system seeks to provide a transcoding method that reduces delays and computational complexity and maintain subjective AN quality. In particular, the system uses additional data (metadata) covering transcoding hints associated with the compressed A/V content.

Therefore, a need has been recognized for a way to allow mobile handheld device users to easily and conveniently use the mobile device in conjunction with a PVR device. In particular, there is a need to provide an apparatus and method for allowing a user to easily operate the mobile device to control the various functions of the PVR, such as selecting the television program for recording, selecting the television programs to be transferred to and from the mobile device, and selecting the television programs to be deleted from the mobile device and/or the PVR. There is also a need to provide an apparatus and method for recording programs on the PVR in a manner that facilitates transfers and playback on the mobile device.

An inventive apparatus and method that addresses the problems mentioned above, as well as others that will become apparent from the description, are described below. The present invention, which is set out in the appended claims, comprises, in one aspect, an improved PVR that allows the user to select one or more encoding formats for recording a selected program in the selected encoding format, or formats. In particular, the present invention comprises a PVR device that allows a user to select a television program for recording in a conventional display format, a mobile device format, or in both a conventional and mobile device format. In response to the user selection, the PVR according to the present invention stores in a storage device, the selected television program in one or more encoding formats. A remote controller, or the mobile display device, can be used to control the PVR, using a graphical user interface (GUI), and an electronic program guide (EPG), to record a program which the EPG indicates is scheduled to be broadcast, and to select the format(s) in which the program will be recorded, i. e., large display, mobile device, or both. In one embodiment a selection can be made while the program is in progress. The present PVR may provide the multiple format recording using two separate encoders for encoding the large display and mobile device formats, respectively.

After the selected program has been saved to the PVR storage device, usually a hard disk, the program can be retrieved and "played" in a number of ways. The user can select a stored program for viewing on the associated display device such as a television set or computer monitor, which is capable of running large display format television programs. In that case, the present PVR automatically selects the large display encoding format for retrieval and processing. Altematively, the user can select a stored program for export, or transmission, to a mobile handheld display device. In that case, the present PVR automatically selects the mobile device format for export to the mobile device. To export the video program, the PVR may transmit via wireless transmission or via wired connection to the mobile device. There are several possible wireless protocols that can be used, and the protocol can be a default protocol or a protocol automatically established when the PVR and mobile device go through a handshake process. For wired protocols, usually a USB port on the PVR and on the mobile device can be connected.

The mobile device can store the program in the mobile device format in which it was transmitted from the PVR, or it can play the television program while it is being broadcast, using conventional spooling processes. After the program is stored in the mobile device storage, it can be played at the convenience of the user of the mobile device. The mobile device can be connected, either wirelessly or wired, to a second mobile device or another device that can use mobile device format programs, and the stored TV program can be transmitted between them.

Following the viewing of the selected program on either the large display or the mobile display device, the apparatus according to the present invention may delete the program from the storage module based on a deletion criteria selected by the user taking into account whether the program has been viewed on the conventional display, the mobile device, or both. For example, the present PVR may be configured to automatically delete a selected program from the storage module upon connection of a mobile device to the PVR, if the selected program is indicated to have been completely viewed on the mobile device, or a command has been entered in the mobile device to delete the program from the PVR's storage module.

The invention is described with reference to the following drawings, wherein:
**FIG. 1** is a block diagram of a PVR embodiment according to the invention;
**FIG. 2** is a flow chart of an embodiment of a method according to the invention;
**FIG. 3** is a graphical user interface screen showing format options for a television program selected to be recorded; and
**FIG. 4** is a graphical user interface screen showing export to mobile device via wireless protocol or via wired connection.

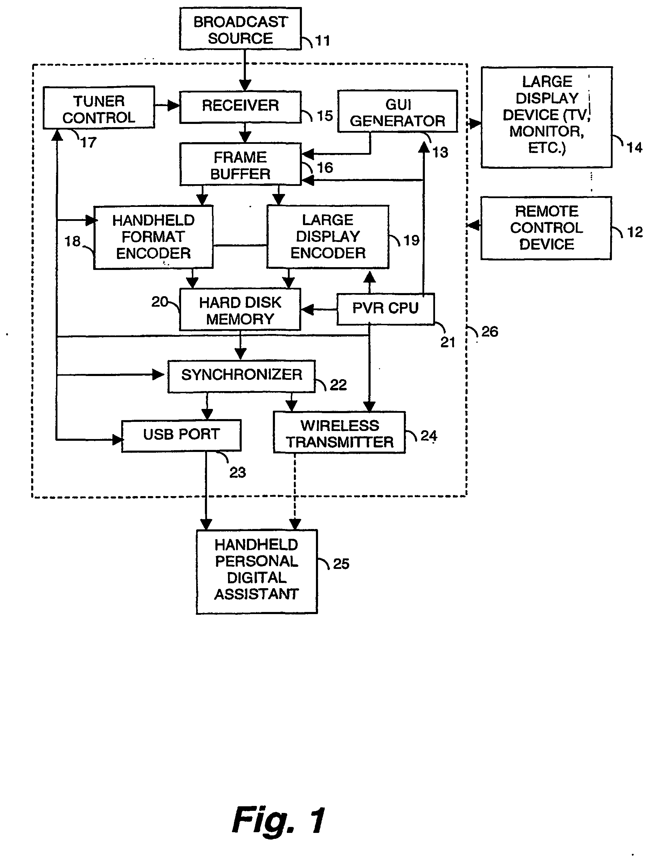

Referring to FIG. 1, an exemplary embodiment of a personal video recorder (PVR) 26 of the invention is illustrated. The PVR 26 comprises a central processing unit 21, which generally coordinates and controls the operation of the various component within PVR 26. PVR 26 receives a video signal from broadcast source 11, which is coupled to PVR 26 via conventionally known methods. The source 11 can be terrestrial TV, digital terrestrial TV, analog cable TV, digital satellite, digital cable, DSL, cable modem, MMDS, or the like. The received video signal is tuned and processed via tuner control 17 and receiver 15. The structure and operation of the receiver and video signal processing related components and the method for controlling such elements is well known and will not be discussed in detail. Also, it is to be understood that although the present invention utilizes a hard disk drive as a storage medium, any suitable storage medium may be used, including, but not limited to, optical media and solid-state memories.

The PVR 26 generates a graphic user interface (GUI) suitable for display on a conventional display device or on mobile device with GUI generator module 13. The GUI generator module 13 may be used to generate on screen displays for displaying various operating modes of PVR 26 and to allow the user to enter various control commands to PVR 26. The GUI generator module 13 may also be used to generate an electronic program guide (EPG) in a manner known in the art. The user typically selects the EPG for display on the TV monitor 14 using the remote control device 12, and then selects a future television program to be "recorded." PVR 26 in response to the user selection tunes a particular channel at a particular time period to automatically record the selected television program. Mobile device 25, also referred to herein as handheld PDA, is a portable general purpose computer that has been programmed, or has loaded therein software, for performing the steps described below. Mobile device 25 may be programmed, or loaded with the appropriate software, using methods known in the art.

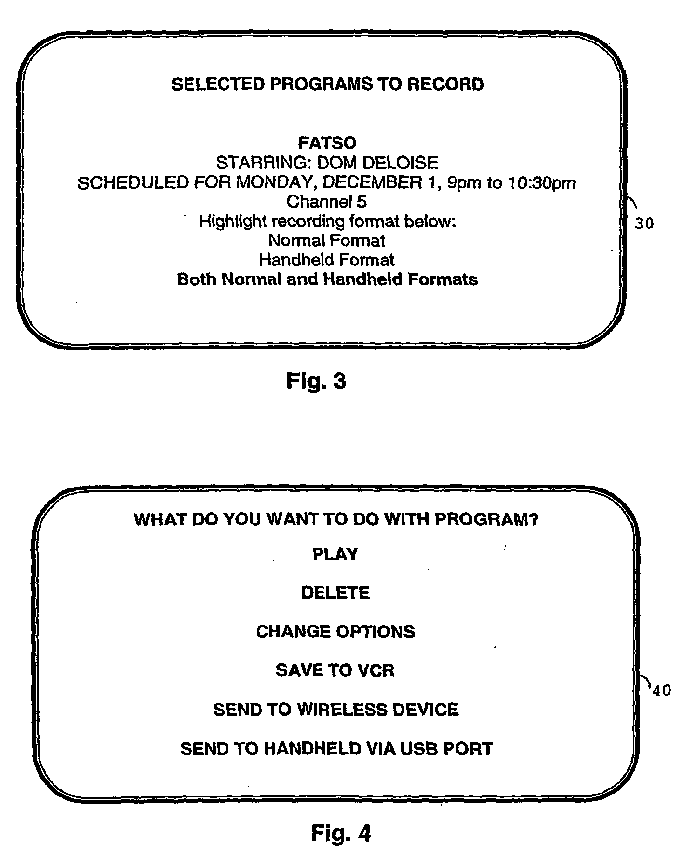

In a conventional PVR, the user selects the program to be recorded by moving a highlight around a grid and pressing ENTER, or similar command, when the highlight is placed around the desired television program. A conventional PVR may also allow a user to select a recording quality if insufficient storage space exists for certain quality levels, and also notify the user of potential conflicts in the recording schedule, and also allow the user to resolve the conflict. However, conventional PVRs do not allow a user to specify the recording format based on the intended viewing device and to specify multiple recordings, each recording in a specified format. The PVR 26 according to the present invention allows the user to specify the formats to be recorded onto the storage device and allows the user to select multiple formats to be recorded onto the storage device, thereby allowing the user to later easily select the viewing platform for the recorded program. A GUI screen 30 for selecting the program and the format in accordance with the invention is illustrated in Fig. 3, wherein the screen 30 displays the program related information, and provides a set of options for the user to select the type of recording formats desired. In particular, the user may select one of a normal format, which is suitable for display on a conventional display, a mobile device format, which is suitable for display on a mobile device, and both the normal format and the mobile device format. The selection may be made using highlights, selector icons, or other suitable method.

When the selected program data is being received, it is sent to a frame buffer 16 and then to one or both of the two encoders, handheld format encoder 18 and large display encoder 19, depending on the format(s) selected by the user. If the user selects only the normal format, the program data is compressed by large display encoder 19 to generate encoded data associated with a conventional display. If the user selects only the mobile device format, the program data is compressed by handheld format encoder 18 to generate encoded data associated with a mobile device. If the user selects both the normal and handheld formats, the program data is processed through both large display encoder 19 and handheld format encoder 18 to simultaneously generate two compressed files, both of which are stored in HDD 20. Having the two formats stored on the HDD 20 allows the desired format to be easily retrieved for display and/or retrieved and exported to a mobile device. When the user selects a display (not shown) that lists the recorded programs on HDD 20, the listing shows which recording formats are available on HDD 20.

In the present embodiment, the large display encoder encodes the program data in accordance with MPEG-2, and the handheld format encoder 18 encodes the program data in accordance with JVT. However, it is to be understood that other encoding formats, which are suitable for storage and processing to provide the desired display format may be utilized. The type of compression used for the mobile device format can be any suitable format, but is different from the large display format since the mobile device will have much less memory capability in general compared to the PVR device and therefore a lower bit rate and lower resolution may be necessary. As such, the mobile device formats are those that are generally optimized for lower bitrates and lower resolution displays. Suitable formats include MPEG4, H.26L, JVT, H.263A, and H.26L algorithms, with JVT being the most preferred.

In an alternate embodiment, the motion vectors generated from the large display encoder 19 are input to the small display encoder 18. The initially generated motion vectors will help form a starting point for the mobile device format encoding motion search and therefore save on processing power. Normally this is a compromise in compression efficiency or quality but has the advantage of a less complex implementation.

In another embodiment wherein the program signal from broadcast source 11 is digital the incoming digital stream must first be decoded and then re-encoded in the mobile display format. In some cases only a partial decode is performed to reduce the complexity of the system. However, this will result in lower quality mobile display compression due to the re-use of elements from the incoming bit stream.

In an embodiment of the invention, the PVR 26 contains a video transcoder to transcode from the PVR playback version of a program into a mobile device playback version of the program. The transcoding can either be done on demand from a user request, or started automatically upon a request to transfer a program to the mobile device 25, which had not been previously stored on the PVR 26 for mobile device playback.

Upon receiving a command from either the remote control device 12 or the mobile device (personal digital assistant) 25, and the connection of the mobile device to the PVR 26, the PVR 26 sends the encoded file formatted for the mobile device to the mobile device either via a wired connection, such as the USB port 23, or via a wireless transmitter 24 using a wireless protocol, such as bluetooth or 802.11b. In either case, a handshake protocol between the PVR 26 and the PDA 25 occurs. The PVR 26 may send live streaming video to the mobile device or may send a complete program for storage in PDA 25 memory for viewing at a later time. A typical GUI for the file export options is illustrated in Fig. 4. Screen 40 may be provided to the user upon selection of a program from a list of available programs.

As is conventional with all PVRs, PVR 26 will decode the large display file (MPEG in this embodiment) and format it for display on the TV monitor 14 in response to user selection of the PLAY option.

It is recognized that it is desirable to provide methods for easily and conveniently synchronizing information between PVR 26 and mobile device 25. The mobile device 25 can control actions by the PVR 26, including selecting which programs to record, and requesting transfer of television programs stored on the PVR to the mobile device, acting as a substitute for the remote control device 12 of PVR 26.

Synchronizing software, for example, Microsoft ActiveSync, can be used for synchronizing a WinCE or PocketPC PDA with a Windows PC for PDR's using a Windows operating system. The PVR 26 will typically periodically download Electronic Program Guide (EPG) information from a subscription source, and provide users with a GUI application 13 to select which programs to record. When programs are selected for recording, the quality of the program can be selected from 4 different values, with higher quality leading to increased storage requirements.

The mobile device 25 can operate in several different modes, to minimize power usage and prolong battery life. The modes are OFF, STANDBY, TRANSFER, and ON. While OFF, the mobile device 25 does not communicate with the PVR 26 and does not use any power. While in STANDBY mode, the mobile device 25 uses a low amount of power, and merely listens for communications requests from the PVR 26. While in STANDBY mode, when the mobile device 25 receives a communications request from the PVR 26, or the mobile device 25 detects that it has entered the range of a wireless LAN connection, the mobile device 25 switches into TRANSFER mode, which consumes more power than STANDBY mode. In the TRANSFER mode, data is transferred between the PVR 26 and the mobile device 25. An indicator light can be lit in TRANSFER mode to indicate to the user that data transfer is occurring, but the video display is not turned ON. When a user is interacting with the mobile device 25, it is switched to the ON mode, where the display is turned ON. Data transfer can also occur while the mobile device 25 is ON. The type of data transferred between handheld device 25 and PVR 26, as well as the actions of PVR 26, may be controlled by the synchronizing information associated with mobile device 25 and PVR 26.

When a user is using the PVR 26 to select which television programs to record, using a GUI application that presents the EPG information, the PVR 26 provides the ability for the user to choose between recording a program for playback using the PVR 26 and/or for playback on the mobile device 25. The PVR 26 stores a list of what programs are stored, and for which platform, as well as a list of what programs are scheduled to be recorded. Meta data for each program may be stored with the list, which contains information about the program from the EPG, such as an episode description, actor and director names, etc.

A GUI application on the PVR 26 allows a user to select which programs to record for playback on the PVR 26, and also lets the user optionally choose to automatically transfer the program to the mobile device 25 as soon as possible, i. e., as soon after the program is recorded that the mobile device 25 is connected to the PVR 26. Otherwise, the user can manually request a transfer of the file from the PVR 26 to the mobile device 25, with the request initiated either from the PVR 26 or the mobile device 25.

The GUI application on the PVR 26 also provides the user a choice of whether to delete the mobile device version of the program from the PVR storage when it is transferred to the mobile device 25. The PVR 26 maintains information about which program(s) are currently stored on the mobile device 25, and that information can be presented to users who are selecting which program to watch using the PVR 26. If the PVR 26 has deleted the PVR stored version of the program for mobile device playback when it was transferred to the mobile device 26, either the PVR 26 or the mobile device 25 can choose to copy the program back from the mobile device 25 to the PVR 26 when they are next connected, while at the same time deleting it from the mobile device storage, to free up room for more programs.

The mobile device 25 includes GUI application that allows users to select which program to play, including decoding and displaying the audio/video, from among those stored on the mobile device 25. When the PVR 26 and mobile device 25 are connected, the list on the PVR 26 of what programs the PVR 26 has stored, and what programs are scheduled for recording, are transferred to the mobile device 25. A GUI application on the mobile device 25 allows the users to view this list, whether or not the mobile device 25 and PVR 26 are currently connected. While the mobile device 25 and PVR 26 are connected, the application on the mobile device 25 allows the user to initiate immediate transfer of programs from the PVR 26 to the mobile device 25. If the mobile device 25 and PVR 26 are not connected, the application allows the user to select desired programs to copy to the mobile device 25 the next time that they are connected. Programs that are scheduled for recording on the PVR 26 but have not yet been stored can be selected for transfer to the mobile device 25. After the scheduled recording takes place the transfer takes place the next time the PVR 26 and mobile device 25 are connected.

If the mobile device 25 is connected to the PVR 26 while a program is being recorded that had been previously selected for automatic transfer to the mobile device, either from the application on the PVR 26 or the mobile device 25, transfer of the mobile device playback version of the program can begin before the recording of the program has completed. If the connection bandwidth is sufficiently high, transfer of data can be batched, to save on mobile device battery life. For example, for transfer of 500 kbps compressed video over a 2 Mbps link, every 4 minutes data could be transmitted for 1 minute, with the mobile device 25 entering standby mode for the other 3 minutes.

After a program is watched on the mobile device 25, the user is presented a choice of whether to delete it from the mobile device 25 and whether to delete the mobile device version of the program and/or the PVR version of the program from the PVR 26 the next time that the devices are connected. After a program is completely watched on the PVR 26, the user is also presented a choice of which, or all, of the stored versions should be deleted: the PVR version stored on the PVR 26, the mobile device version stored on the PVR 26, and the mobile device version stored on the mobile device 25, the last of which takes place the next time the PVR 26 and mobile device 25 are connected. For example, a user may decide to record a program for both PVR and mobile device playback, not knowing in advance which version would be watched. Once the user watches the program, whether using the PVR 26 or the mobile device 25, the user may want to delete all versions of the program.

In another embodiment of the invention, the EPG data is downloaded to the mobile device 25 when it is connected to the PVR 26. EPG data may include television program names, start and stop times, channel, program description, actor and director names, etc. The mobile device 25 provides a GUI application for the user to select which programs to record on the PVR 26. When the mobile device 25 and PVR 26 are next connected, information about the selected programs is transferred to the PVR 26. The PVR 26 receives the list of selected programs and merges it with its existing schedule of programs to record.

The PVR 26 can transfer programs to/from more than one mobile device. A mobile device can also transfer programs to/from another multiple device, using any of the types of wired or wireless connections.

During synchronization, data is transferred from the PVR 26 to the mobile device 25 including a list of programs stored on PVR 26, including intended platform, list of programs scheduled to be recorded on PVR 26, including intended platform, compressed audio/video television programs, batched compressed programs, and the EPG. Also, data is transferred to the PVR 26 from the mobile device 25 including which programs to transfer to mobile device 25, which scheduled for recording programs to transfer to mobile device 25 when available, which programs were watched on mobile device 25, which programs to delete on PVR 26, compressed audio/video television programs to return to storage on PVR 26, and which programs to record on PVR 26.

The PVR functions include retrieving EPG info, presenting the EPG in GUI application, generating the GUI application to select programs to record, with choice of intended for PVR playback and/or mobile device playback (hi res and low res), starting recording on schedule, allowing on demand transcoding to low res from hi res (before or during a transfer to mobile device), generating the GUI application to select program to transfer to mobile device, mark program as transferred, or default to delete from PVR 26 when transferred, deleting either or both resolution files when mobile device 25 indicates viewed there, scheduling transfer.

The mobile device functions include receiving program and EPG data from PVR 26, generating GUI to select program to view, video decoder/playback, mark program as viewed, optionally copy back to PVR 26 if not watched, but want to copy something else, and was deleted from PVR 26, EPG presentation and selection of programs to record, which is synched with PVR 26 when connected, recording actually done on PVR 26, selecting what program want to watch next, even though program is on PVR 26 (or scheduled to be on PVR), special deletion rules for mobile device, based in part on whether still stored on PVR 26.

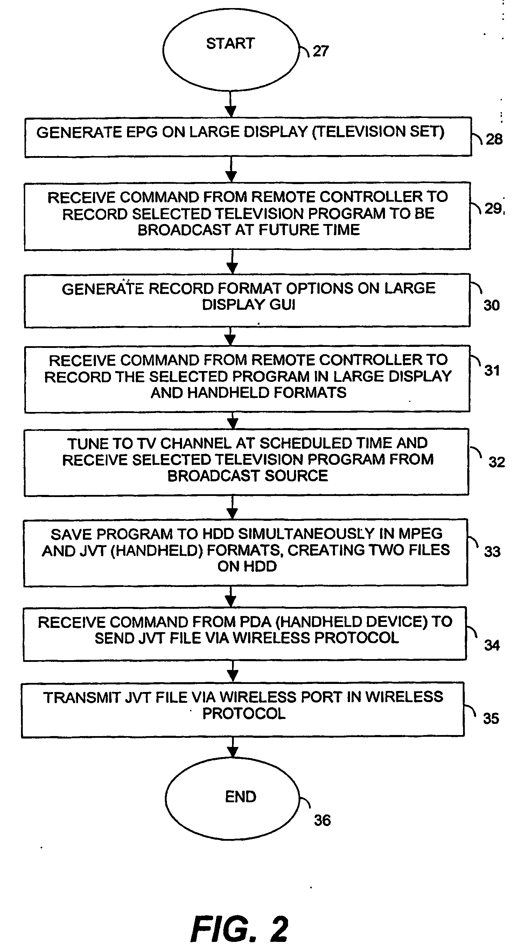

Referring now to FIG. 2, the process is illustrated as starting at 27, wherein the PVR 26 generates 28 an EPG on large display TV, receives command from remote control device 12 or mobile device 25 to record 29 selected program from a particular or default broadcast source 11, generate a record format option list on the GUI 30 (i.e., either "TV" format, PDA format, or both), receiving 31 a command from remote control device 12 (or the PDA) to record a selected program in large and mobile device formats (in the illustrated embodiment), tuning 32 to TV channel at the scheduled time to receive the program from the broadcast source, storing 33 the program to HDD in both formats. When the user selects to send the program to the mobile device 25, a command is received 34 from either the mobile device 25 or the remote control device 12 to send the file encoded in the mobile device format via wireless protocol through the wireless transmitter on the PVR 26, or through the USB port in a wired protocol transmission, and the process is completed 36 after the file is transmitted 35. The program data is then processed and displayed on either mobile device 25 or display 14 as selected by the user, and then deleted as desired based on selections made by the user as described above.

The steps described above may be implemented using software and programming techniques known to those skilled in the art.

## Claims

1. A television recording and playback system, comprising:
a storage device (20);
a remote controller (12);
means for receiving (15) a television program from a broadcast source (11);
means for generating (15) a graphic user interface (GUI) for allowing a user to select, using the remote controller, a first television program to be received and stored in the storage device and to select at least one display format from a plurality of display format in which the first television program is to be recorded ;
means for receiving and storing (18,19) in the storage device the first selected television program in a first display format or in a second display format adapted for display on a handheld device, or in the first and second display formats in the storage device in response to a user selection; and
means for transfening (23,24) to a handheld display device, the first television program in the second display format in response to user selection.

2. The system of claim 1, further comprising
means for receiving (15) electronic program guide (EPG) information having television schedule information;
means for transferring (23,24) the EPG information to the handheld display device and for accepting programming information indicative of television programs selected for storage from the handheld display device, wherein the receiving and storing means receives and stores the selected television programs in response to the programming information.

3. The system of claim 2, wherein the programming information included device playback information indicative of designated playback devices associated with the respective selected television programs, the receiving and storing means storing the selected television programs in the first, second, or first and second display formats in response to the device playback information.

4. The system of any claims 1 to 3, wherein
the generating means generates a synchronizing menu for allowing a user to selectively transfer programs stored in the storage device to the handheld display device and to selectively transfer programs from the handheld display device to the storage device.

5. The system of claim 4, wherein
the synchronizing menu provides a viewed status of programs transferred to handheld display device and allows the user to select to delete the viewed programs from the storage device when the handheld display device is coupled to the system.

6. The system of claim 4, wherein
the synchronizing menu provides a viewed status of programs stored in the storage device and allows the user to select to delete the viewed programs from the handheld display device when the handheld display device is coupled to the system.

7. A method for controlling a television recording and playback system, comprising the steps of:
receiving (29) user selected programming information indicative of television programs to be recorded to a storage device, and at least one user selected display format from a plurality of formats in which the television programs are to be recorded;
receiving and storing (32,33) the selected television programs in a first display format, or in a second display format adapted for display on a handheld display device, or in the first and second display formats on the storage device, in response to the programming information and the user selected display format selection;
providing (34,40) a graphic user interface (GUI) for allowing a user to select a stored television program to be transferred to a handheld display device; and
transferring (35) the selected stored television program in the second display format to the handheld display device in response to a user synchronization mode selection.

8. The method of claim 7 further comprising
receiving (28) electronic program guide (EPG) information having television schedule information; and
transferring the EPG information to the handheld display device and for accepting (29) programming information indicative of television programs selected for storage from the handheld display device; and
receiving and storing (32,33) the selected television programs in response to the programming information.

9. The method of claims 7 ou 8, wherein the programming information comprises providing device playback information indicative of designated playback devices associated with the respective selected television programs; and
receiving and storing selected television programs in the first, second, or first and second display formats in response to the device playback information.

10. The method of any claims 7 to 9, further including generating a synchronizing menu for allowing a user to selectively transfer programs stored in the storage device to the handheld display device and to selectively transfer programs from the handheld display device to the storage device.

11. The method of claim 10 wherein the synchronizing menu provides a viewed status of programs transferred to handheld display device and allows the user to select to delete the viewed programs from the storage device when the handheld display device is coupled to the television recording and playback system or when the handheld device is next coupled to the television recording and playback system.

12. The method of claim 10 wherein the synchronizing menu provides a viewed status of programs stored in the storage device and allows the user to select to delete the viewed programs from the handheld display device when the handheld display device is coupled to the system.

## Revendications

1. Un système d'enregistrement et de reproduction de programmes de télévision, comprenant :
un dispositif de stockage (20) ;
une télécommande (12) ;
un moyen permettant de recevoir (15) un programme de télévision à partir d'une source de diffusion (11) ;
un moyen permettant de générer (15) une interface utilisateur graphique (IUG) pour permettre à un utilisateur de sélectionner, à l'aide de la télécommande, un premier programme de télévision à recevoir et à stocker dans le dispositif de stockage, et de sélectionner au moins un format d'affichage à partir d'une pluralité de formats d'affichage, dans lequel le premier programme de télévision doit être enregistré ;
un moyen permettant de recevoir et de stocker (18, 19) dans le dispositif de stockage le premier programme de télévision sélectionné dans un premier format d'affichage ou dans un second format d'affichage adapté à l'affichage sur un dispositif portable, ou dans les premier et second formats d'affichage dans le dispositif de stockage en réponse à une sélection par l'utilisateur ; et
un moyen permettant de transférer (23, 24) vers un dispositif d'affichage portable le premier programme de télévision dans le second format d'affichage en réponse à la sélection par l'utilisateur.

2. Le système de la revendication 1, comprenant en outre :
un moyen permettant de recevoir (15) des informations d'un guide électronique des programmes (EPG) possédant des informations de programmation de la télévision ;
un moyen permettant de transférer (23, 24) les informations EPG vers le dispositif d'affichage portable et d'accepter les informations de programmation indiquant les programmes de télévision sélectionnés pour le stockage à partir du dispositif d'affichage portable, dans lequel le moyen de réception et de stockage reçoit et stocke les programmes de télévision sélectionnés en réponse aux informations de programmation.

3. Le système de la revendication 2, dans lequel les informations de programmation incluent les informations de reproduction du dispositif indiquant les dispositifs de reproduction désignés associés aux programmes de télévision sélectionnés respectifs, les moyens de réception et de stockage stockant les programmes de télévision sélectionnés dans les premier, second, ou premier et second formats d'affichage en réponse aux informations de reproduction du dispositif.

4. Le système de l'une quelconque des revendications 1 à 3, dans lequel
le moyen de génération produit un menu de synchronisation pour permettre à un utilisateur de transférer de façon sélective des programmes stockés dans le dispositif de stockage vers le dispositif d'affichage portable et de transférer de façon sélective des programmes du dispositif d'affichage portable vers le dispositif de stockage.

5. Le système de la revendication 4, dans lequel
le menu de synchronisation fournit un état "visualisé" des programmes transférés vers le dispositif d'affichage portable et permet à l'utilisateur de choisir de supprimer les programmes visualisés du dispositif de stockage lorsque le dispositif d'affichage portable est relié au système.

6. Le système de la revendication 4, dans lequel
le menu de synchronisation fournit un état "visualisé" des programmes stockés dans le dispositif de stockage et permet à l'utilisateur de choisir de supprimer les programmes visualisés du dispositif d'affichage portable lorsque le dispositif d'affichage portable est relié au système.

7. Un procédé pour commander un système d'enregistrement et de reproduction de programmes de télévision, composé des étapes :
de réception (29) des informations de programmation sélectionnées par l'utilisateur indiquant les programmes de télévision à enregistrer vers un dispositif de stockage, et au moins d'un format d'affichage sélectionné par l'utilisateur à partir d'une pluralité de formats dans lequel les programmes de télévision doivent être enregistrés ;
de réception et de stockage (32, 33) des programmes de télévision sélectionnés dans un premier format d'affichage, ou dans un second format d'affichage adapté à l'affichage sur un dispositif d'affichage portable, ou dans les premier et second formats d'affichage sur le dispositif de stockage, en réponse aux informations de programmation et à la sélection du format d'affichage sélectionné par l'utilisateur ;
de fourniture (34, 40) d'une interface utilisateur graphique (IUG) pour permettre à un utilisateur de sélectionner un programme de télévision stocké à transférer vers un dispositif d'affichage portable ; et
de transfert (35) du programme de télévision stocké sélectionné dans le second format d'affichage vers le dispositif d'affichage portable en réponse à une sélection du mode de synchronisation par l'utilisateur.

8. Le procédé de la revendication 7 comprenant en outre :
la réception (28) des informations du guide électronique des programmes (EPG) possédant les informations de programmation de télévision ; et
le transfert des informations EPG vers le dispositif d'affichage portable et l'acceptation (29) des informations de programmation indiquant les programmes de télévision sélectionnés pour le stockage à partir du dispositif d'affichage portable ; et
la réception et le stockage (32, 33) des programmes de télévision sélectionnés en réponse aux informations de programmation.

9. Le procédé des revendications 7 ou 8, dans lequel les informations de programmation incluent la fourniture d'informations de reproduction du dispositif indiquant les dispositifs de reproduction désignés associés aux programmes de télévision sélectionnés respectifs ; et
la réception et le stockage des programmes de télévision sélectionnés dans les premier, second, ou premier et second formats d'affichage en réponse aux informations de reproduction du dispositif.

10. Le procédé de l'une quelconque des revendications 7 à 9, comprenant en outre la génération d'un menu de synchronisation pour permettre à un utilisateur de transférer de façon sélective des programmes stockés dans le dispositif de stockage vers le dispositif d'affichage portable et de transférer de façon sélective des programmes du dispositif d'affichage portable vers le dispositif de stockage.

11. Le procédé de la revendication 10, dans lequel le menu de synchronisation fournit un état "visualisé" des programmes transférés vers le dispositif d'affichage portable et permet à l'utilisateur de choisir de supprimer les programmes visualisés du dispositif de stockage lorsque le dispositif d'affichage portable est relié au système d'enregistrement et de reproduction de télévision ou lorsque le dispositif portable est ensuite relié au système d'enregistrement et de reproduction de télévision.

12. Le procédé de la revendication 10, dans lequel le menu de synchronisation fournit un état "visualisé" des programmes stockés dans le dispositif de stockage et permet à l'utilisateur de choisir de supprimer les programmes visualisés du dispositif d'affichage portable lorsque le dispositif d'affichage portable est relié au système.

## Patentansprüche

1. Ein Fernseh- Aufnahme- und Wiedergabesystem, das beinhaltet:
eine Speichervorrichtung (20);
eine Fernbedienung(12);
Mittel zum Empfang (15) eines Fernsehprogramms aus einer Rundfunkübertragungsquelle (11);
Mittel zur Erzeugung (15) einer grafischen Benutzerschnittstelle (graphic user interface GUI), die es einem Benutzer erlaubt, unter Benutzung der Fernbedienung, ein erstes Fernsehprogramm zu wählen, das empfangen und in einer Speichervorrichtung gespeichert wird und zumindest ein Anzeigeformat, um aus einer Vielzahl von Anzeigeformaten auszuwählen, wobei das erste Fernsehprogramm aufgezeichnet werden soll;
Mittel zum Empfang und Speichern (18, 19) des ersten ausgewählten Fernsehprogramm in einer Speichervorrichtung in einem ersten Anzeigeformat, oder in einem zweiten Anzeigeformat, das einem Bildschirm (display) für ein tragbares Gerät angepasst ist, oder im ersten und zweiten Anzeigeformat in der Speichervorrichtung als Antwort auf eine Auswahl durch den Benutzer; und
Mittel zur Übertragung (23, 24) auf ein tragbares Anzeigegerät des ersten Fernsehprogramms im zweiten Anzeigeformat, als Antwort auf eine Auswahl durch den Benutzer.

2. Das System nach Anspruch 1, weiter beinhaltend:
Mittel zum Empfang (15) von Informationen aus einem elektronischen Programmführer (electronic program guide EPG), die Informationen zum Fernsehprogramm beinhalten;
Mittel zur Übertragung (23, 24) der Informationen aus dem elektronischen Programmführer EPG auf das tragbare Anzeigegerät und zur Annahme von Programmierinformationen, die auf ausgewählte Programme zur Aufnahme von dem tragbaren Anzeigegerät hinweisen, wobei die Empfangs- und Speichermittel die ausgewählten Fernsehprogramme empfangen und speichern, als Antwort auf die Programmierinformation.

3. Das System nach Anspruch 2, wobei die Programmierinformation Informationen zur Gerätewiedergabe einschliesst, die auf bestimmte Wiedergabegeräte hinweisen, die mit den jeweils gewählten Fernsehprogrammen verknüpft sind, wobei die Empfangs- und Speichermittel die gewählten Fernsehprogramme in dem ersten, dem zweiten oder dem ersten und dem zweiten Anzeigeformat speichern, als Antwort auf die Information zur Gerätewiedergabe.

4. Das System nach den Ansprüchen 1 bis 3, wobei die Erzeugungsmittel ein Synchronisationsmenü erzeugen, das dem Benutzer gestattet, selektiv gespeicherte Programme aus der Speichervorrichtung an tragbare Anzeigegeräte zu übertragen und selektiv Programme von dem tragbaren Anzeigegerät an die Speichervorrichtung überträgt.

5. Das System nach Anspruch 4, wobei das Synchronisationsmenü einen "Betrachtet-Zustand" an das tragbare Anzeigegerät der übertragenen Programme liefert und es dem Benutzer erlaubt, die gesehenen Programme zum Löschen aus der Speichervorrichtung auszuwählen, wenn das tragbare Anzeigegerät mit dem System verbunden ist.

6. Das System nach Anspruch 4, wobei das Synchronisationsmenü einen "Betrachtet-Zustand", der in der Speichervorrichtung gespeicherten Programme, liefert und es dem Benutzer gestattet die gesehenen Programme aus dem tragbaren Anzeigegerät zum Löschen auszuwählen, wenn das tragbare Anzeigegerät mit dem System verbunden ist.

7. Ein Verfahren zur Steuerung eines Aufnahme- und Wiedergabesystems, das die Schritte beinhaltet:
Empfang (29) einer vom Benutzer gewählten Programmierinformation, die die in eine Speichervorrichtung aufzunehmenden Fernsehprogramme und zumindest ein vom Benutzer ausgewähltes Anzeigeformat aus einer Vielzahl von Anzeigeformaten, in denen die Fernsehprogramme aufgenommen werden sollen, anzeigt:
Empfang und Speicherung (32, 33) der gewählten Fernsehprogramme in einem ersten Anzeigeformat, oder in einem zweiten Anzeigeformat, die zur Anzeige an tragbare Anzeigegeräte angepasst sind, oder in dem ersten Anzeigeformat und dem zweiten Anzeigeformat in der Speichervorrichtung, als Antwort auf die Programmierinformation und die vom Benutzer gewählte Anzeigeformatauswahl;
Bereitstellung (34, 40) einer grafischen Benutzerschnittstelle (graphic user interface GUI), die es dem Benutzer erlaubt, ein gewähltes Fernsehprogramm an das tragbare Anzeigegerät zu übertragen und
Übertragung (35) des gewählten, gespeicherten Fernsehprogramms in das zweite Anzeigeformat an das tragbare Anzeigegerät, als Antwort auf einen vom Benutzer gewählten Synchronisationmodus.

8. Das Verfahren nach Anspruch 7, das ferner beinhaltet:
den Empfang (28) von Informationen aus dem elektronischen Programmführer (electronic program guide EPG), der Informationen zum Fernsehprogramm beinhaltet; und
die Übertragung der Informationen des Programmführers an das tragbare Anzeigegerät und Bestätigung (29) der Programmierinformation, die auf aufzunehmende, gewählte Fernsehprogramme hinweisen durch das tragbare Anzeigegerät; und
Empfang und Speicherung (32, 33) der gewählten Fernsehprogramme als Antwort auf die Programmierinformation.

9. Verfahren nach Anspruch 7 oder 8, wobei die Programmierinformation die Bereitstellung der Informationen zur Gerätewiedergabe beinhaltet, die auf bestimmte Wiedergabevorrichtungen hinweist, die mit dem jeweils gewählten Fernsehprogramm verbunden sind; und
Empfang und Speicherung gewählter Fernsehprogramme in dem ersten, dem zweiten oder dem ersten und zweiten Anzeigeformat, als Antwort auf Informationen zur Gerätewiedergabe.

10. Das Verfahren nach den Ansprüchen 7 bis 9, das ferner die Erzeugung eines Synchronisationsmenüs beinhalt, das es dem Benutzer erlaubt, selektiv gespeicherte Programme in der Speichervorrichtung an das tragbare Anzeigegerät zu übertragen und selektiv Programme von dem tragbaren Anzeigegerät an die Speichervorrichtung zu übertragen.

11. Das Verfahren nach Anspruch 10, wobei das Synchronisationsmenü einen "Betrachtet-Zustand", der an das tragbare Anzeigegerät übertragenen Programme bereitstellt und es dem Benutzer gestattet, die gezeigten Programme zum Löschen aus der Speichervorrichtung auszuwählen, wenn das tragbare Anzeigegerät an das Fernsehaufnahme- und Wiedergabegerät angeschlossen ist, oder wenn das tragbare Gerät mit dem Fernsehaufnahme- und Wiedergabegerät verbunden ist.

12. Verfahren nach Anspruch 10, wobei das Synchronisationsmenü einen "Betrachtet-Zustand" von den in der Speichervorrichtung gespeicherten Programmen zur Verfügung stellt und dem Benutzer gestattet, betrachtete Programme zum Löschen aus dem tragbaren Anzeigegerät auszuwählen, wenn das tragbare Anzeigegerät mit dem System verbunden ist.
